Europäisches Patentamt

European Patent Office

Office européen des brevets

(19)

(11) Publication number: 0 214 513
A2

(12)

# EUROPEAN PATENT APPLICATION

(21) Application number: 86111461.9

(22) Date of filing: 19.08.86

(51) Int. Cl.⁴: **B 60 T 8/00**

(30) Priority: 29.08.85 US 770854

(43) Date of publication of application:
18.03.87 Bulletin 87/12

(84) Designated Contracting States:
DE FR GB IT

(71) Applicant: Russell, Carl D.
P.O. Box 334
Sallisaw Oklahoma 74955(US)

(72) Inventor: Russell, Carl D.
P.O. Box 334
Sallisaw Oklahoma 74955(US)

(74) Representative: Tetzner, Volkmar, Dr.-Ing. Dr. Jur.
Van-Gogh-Strasse 3
D-8000 München 71(DE)

(54) An auxiliary mechanical and physically controlled electronic actuated pressure handling apparatus for truck and trailer braking systems.

(57) An auxiliary manual and physically controlled electronic-actuated air pressure handling apparatus for air-braking systems induced into the braking system to become a tool to aid the operator in providing rapid OFF-and-ON or conventional braking, the selection of which is determined by the road surface and the traction thereof.

EP 0 214 513 A2

Croydon Printing Company Ltd.

An auxiliary mechanical and physically controlled electronic actuated pressure handling apparatus for truck and trailer braking systems.

The invention relates to improvements in air pressure handling to the brake cylinders and exhausting air pressures therefrom allowing the operator more latitude to induce effective traction while braking to reduce the possibility of jack-knifing.

The object of the invention is to provide more effective traction on unstable road surface by rapid intermittent braking process at approximately 1/6 per second ON and 1/12 per second OFF.

Another object is to reduce build-up of a moving surface under the tires by allowing the brakes to release and then hold intermittently to aid in dispelling foreign material accumulated under the tires.

Still another object is to reduce the hot spots on tires by allowing the brakes to release and hold intermittently to prevent locking of the brakes.

Another object is to provide conventional braking process on stable road surface conditions.

Another object is to allow the operator to use his own techniques in providing suitable air pressure to the braking process, either conventional or intermittent, to enhance his own safety and the safety of the cargo.

A still further object is to provide an iron magnetic collector intensifying the electro-magnet induction forces on the valve enhansing their rapidity of action.

Another object is to induce valves to open and close independently in sequences.

A still further object of the invention is to provide a switch to nullify the overriding electronic intermittent system and retain conventional braking upon failure in the electronic system.

The invention will be further described in connection with the embodiments thereof shown in the attached drawings wherein. FIG. 1 shows a portion of a tractor and general location of the components numbered as they are in the description.

FIG. 2 shows the mechanical and physical switching device in a cutaway view and numbered in a non-active state.

FIG. 3 shows a similar view of the above-mentioned components in an active state.

FIG. 4 shows a split view of the air-handling assembly 50 with valves in normal position with all parts numbered with transitor.

FIG. 5 schows a face view of the stripped block 40 of the air-handling means 50 designating passages and ports and a pressure retaining arrangement.

FIG. 6 shows a split view of an air-handling assembly 50 in air-retaining and cylinder exhausting position as activated in one cycle of the intermittent braking process with a transistor.

FIG. 7 schows the IC clock circuit.

FIG. 8 shows a flexible diaphragm which is a portion of a closure of a port.

FIG. 9 shows an iron encompassment to intensify the induction of a coil.

FIG. 10 shows an inlet valve with spring of light tension.

FIG. 11 shows an exhaust valve with spring of heavy tension.

FIG. 12 shows a pressure retaining valve.

FIG. 13 is a detailed view of the electro-mechanical controls.

FIG. 13A is a view in side elevation of a pendulum for operating two switches, an over ride rod for operating a safety switch; and a pair of mercury switches for detecting lateral movement.

FIG. 13B shows two mercury switches in a holder.

FIG. 14 is an electrical schematic of the switches with the pendulum in home position.

FIG. 15 shows the schematic of FIG. 14 when the pendulum is moving out.

FIG. 15 shows the same schematic when the pendulum is all the way out.

FIG. 17  is a circuit diagramm of suitable control for the SOLENOID-VALVE UNIT.

FIG. 18 is a view in section of a different embodiment using a single pendulum to operate a fixed switch.

FIG. 18A is a circuit useful for control purposes when the truck is equipped with both 12 volt and 24 volt electrical supply voltages.

FIG. 19 shows a single pendulum operating two switches and a pair of lateral movement detector liquid switches.

Description:

An auxiliary mechanical and physically controlled elctronic actuated air pressure handling apparatus induced into the braking system of a truck or trailer comprising 4 components:

1. A mechanism to equate the braking forces with traction to the reduction of momentum measured by the position of the pendulum which actuates the micro-switch 6 which may supply an electrical current pathway as selected by road surface and traction thereof.

2. An IC clock circuit supplying rapid suitable in-
   ermittent electrical currents to a transistor
   providing an intermittent electrical pathway from
   battery to energize the coils which actuate valves.

3. An air-handling apparatus comprising passages,
   ports, diaphragms and valves to distribute and
   release air pressures to and from the braking cylinder.

4. An iron magnetic collector intensifying the electro-
   magnet induction forces on the valve enhansing their
   rapidity of action of independent opening and closing
   of valves in sequences.

Description of components:

1 Assembly is the equator and selector of the mode of
braking, frame 1' having round bar 2 extending across
upper reaches to become a portion of a pivotal arrangement for hanging pivotal forked bar 3 tensioned by
spring 3' and hanging pivotal pendulum bar 4 tensioned
by spring 4' which is weighted on lower end to which a
safety switch is secured and to be actuated by the outer
extended end of the threaded rod 35. Flat bar 7 extending across lower reaches of frame 1 having opening
7' in center portion and monitoring cylinder 33 formed
in lower reaches of frame 1 in alignment with opening
7' in flat bar 7 is fitted with air-actuated piston 34
which is secured to threaded rod 35 with spring 8 tension nut 9' and bumper plug 36 extending through opening 7' in flat bar 7 to actuate forked bar 3 whereby the pendulum 4 which is connected by 4'' to micro-switch 6 which is secured to forked bar 3 may provide an electrical pathway by position of pendulum 4 in relation to forked bar 3.

Battery 60 is connected from negative post by ground cable 91 to ground 90. Conduit 92 connected to the positive side of battery 60 provides an electrical current pathway to the pressure actuated switch 10 with electrical conduit 61 providing electrical current pathway to safety-switch 5. From safety switch 5 conduit 62 provides electrical current pathway to micro-switch 6. Conduit 63 provides electrical current pathway from micro-switch 6 to IC clock circuit 11 which supplies suitable electrical current intermittently by an electrical current path through conduit 64 to transitor 12's base 13.

Battery 60 supplies electrical current through electrical current pathway conduit 65 to transitor 12's collector 14 and conduit 66 from transitor's emitter 15 to coil 44A and conduit 67 from emitter 15 to coil 44B and conduit 68 conducts electrical currents from coil 44A to ground 90. Conduit 69 conducts electrical currents from 44B to ground 90.

A motor-driven air compressor 20 supplies through air line 21 to storage tank 22 and air line 23 extending to foot-actuated metering valve 30 provided with air lines, one line 24 extending to pressure switch 10 and another air line 25 extends to monitoring cylinder 33 and still another air line 26 extending to an electronic air handling apparatus 50 comprising a block 40 and having an inlet passage 40' which extends to inlet port 41 which is fitted with diaphragm 41' and in conjunction with inlet valve 42 which is fitted with light spring 42' forms a closure for port 41. A housing 43 encompassing diaphragm 41 and valve 42 and light spring 42' is held down by plate 43' and is encompassed on its outer and by coil 44A and magnetic collector 44' and is secured in place by plate 45, bolts 45' and nuts 45''.

Port 41 is intersected by passage 46 where air line 46' extends brake cylinder 70, port 47 which is fitted with diaphragm 41' in conjunction with exhaust valve 48 and heavy tension spring 48' forms a closure for port 47. A valve closure 43 is held down by plate 43' which is encompassed on its inner end by a magnetic collector 44' and on the outer end coil 44B which is secured in place by bolts 45' and nuts 45''. From port 47 passage 57' extends outward to port 47'' which is fitted with valve 49 with spring 49' and case 49''.

Addendum:

Motions' resistance to change provides the means to effect a pivotal weighted bar to change positions in relation to the quality of motion change. As the pendulum is an arrangement to open and close electrical pathway by actuating a switch which is provided with tensions of springs and an air actuated piston in an arrangement to effect the relationship of the pendulum and the forked bar to which the switch is secured which may supply electrical currents to the air-handling apparatus which provide air pressure forces to braking cylinders causing resistance to the turning of the wheels and the surface provides the traction which effects the quality of reduction of momentum. This induces the position of the pendulum that selects the mode of braking, intermittent or conventional.

The pendulum in relation to a forked bar provided with spring tensions and actuated by a piston propelled by air pressure allows a graduated application of the intermittent rapid ON and OFF braking. This extends to the rapid intermittent braking to a greater degree in restistance to motion as the air pressure is increased. As example, low air pressure, 10-15 1b, the intermittent braking will allow the pendulum to move forward out of the intermittent range at a lesser pace of speed reduction to induce conventional braking process than if the air pressure are increased requiring greater speed reduction before the conventional braking process is in effect. The pendulum is provided with a safety switch which may be actuated by the end of a rod extending from the piston in the monitoring cylinder that is pressure-actuated and will nullify the overriding braking process should it become ineffective.

Operation:

A truck and trailer travelling at a speed suitable for the conditions of the highway:

The compressor 20 running supplies air pressurse of approximately 100 to 110 1b per in. to air tank 22 which has air line 23 to a foot pedal actuated metering valve 30 to provide air pressure in braking process to slow truck and trailer according to the operator's option. He may touch the pedal lightly as he desires allowing metered air pressure to be supplied through air line 24 extending to pressure switch 10 and another air line 25 extending to monitorung cylinder 33 and stll another air line 26 extending to air handling apparatus 50 which is equipped with an inlet valve 42, that is normally opened by spring and gravity, allowing air pressure through air passage 46 and air line 46' to brake cylinder 70 to expand where air is retained by the normally closed exhaust valve 48. This order results in conventional braking.

Should greater pressure be applied to the foot pedal increasing the air pressure as supplied by the metering valve 30 to a point to close contacts in the pressure switch 10 providing an electrical pathway from the battery 60 through conduit 92 which is an electrical pathway from battery 60 by conduit 92 to conduit 61 to safety switch 5 which is provided with conduit 62 to micro-switch 6. As equal pressure has been raised in the monitoring cylinder 33 and in the braking cylinder 70, which restricts the turning of the wheel and should the traction be effective in reducing the momentum of the truck and trailer, the pendulum arm 4 beeing attached by rod 4'' to micro-switch 6, which is securd to forked bar 3, is only restricted from forward travel by spring 4' light tension. Forked bar 3 is restricted form forward travel by spring 3' heavy tension. However, if traction effectively reduces the momentum causing the pendulum arm 4 to overcome restriction of spring 4' light tension to swing forward to a pre-designated angle causing the opening of the electrical circuit of micro-switch 6 then conventional braking continues.

But, should traction be reduced to point where the quality of decrease of mementum deteriorates to the point where spring 4' tension may withdraw, the pendulum which is connected to micro-switch 6 closing the contacts, an electrical pathway is provided through conduit 63 to IC clock circuit 11 which supplies through conduit 11' electricaltime-space current intermittently to a transitor 12Äs base 13 which is supplied by electrical current from battery 60 through conduit 64 to transitor 12's collector base and conduit 65 from transitor's emitter 15 to coils 44A. Conduit 66 is a pathway for electrical currents from emitter 65 to coil 44B and conduit 67 conducts electrical currents from coil 44A to ground 90. Conduit 68 conducts electrical currents from 44B to ground 90. When coils 44A and 44B are energized simultaneously inlet valve 42 is lifted by induction  against light spring tension 42' will close inlet port 41 early and as the electrical current is supplied simultaneously through coils 44B also energizing it, by induction, lifts valve 48 against heavier spring 48' to open exhaust port 47 later, where a predetermined pressure to retain brake shoe in position is retained in the exhaust passageway by valve 49 fittet with spring 49' and tensioned by case 49''.

When the flow of each intermittent current ceases through coils 45A and 45B, greater spring tension 48' will cause the exhaust valve 48 to close early and the lighter spring 42' will cause inlet valve 42 to open later. This opening and closing of valves will continue until suitable traction is established to provide the quality of reduction of momentum causing the pendulum to move forward and thus allowing the flow of electrical currents to cease to air handling apparatus and resulting in conventional braking.

The mechanism to equate the braking force with the traction to the reduction of momentum is provided as a safety feature to identify unstable road surfaces and provide suitable braking action. It also allows the intermittent braking to be extended into higher air pressure effectiveness.

FIGS. 13-18 depict alternative switching arrangements for controlling the intermittent braking application process.

In FIG. 13, there is shown a single pendulum 1000 which operates two switches 1001, 1003 to cause power to be supplied to the solenoid 1007 (FIG. 17) once the brakes are applied, as soon as traction starts reducing momentum, to operate the air valve in intermittent fashion. Thus, the air pressure is supplied and exhausted to and from vehicle brake chamber, effecting the diaphragm connected to the brake actuators.

Switches 1001 and 1003 are mounted between a pair of spaced apart plastic rectangular plates 1010 and 1011 (not shown but identical to plate 1010) and about 1/2 inch therefrom).

The plates are carried by upright frame 1015, being attached thereto by pin 1017. The plates 1010, 1011 bear against frame knee 1021 and are confined by mounting structure 1025 provided for a printed circuit board for the electronic circuit of FIG. 17.

Pendulum 1000 is supported by pin 1018, spanning plastic plates 1010, 1011, and the pendulum is stopped at 93 degrees from the horizontal (i.e. 3 degrees ahead of the vertical). Stop 1025, carried by the lower cylindrical weight 1027 of pendulum 1000, bears against the plastic plates 1010, 1011. This permits the pendulum to enter the space between the plastic plates 1010, 1011 and physically contact switch arms 1001A and 1003A without damaging the arms due to truck vibration and movements.

The pendulum is made of steel and measure about 6 inches in length by 1/4 inch wide by 1/2 inch thick, and carries a 1 inch cylindrical solid steel rod 1027, 1 inch long at its lower extremity.

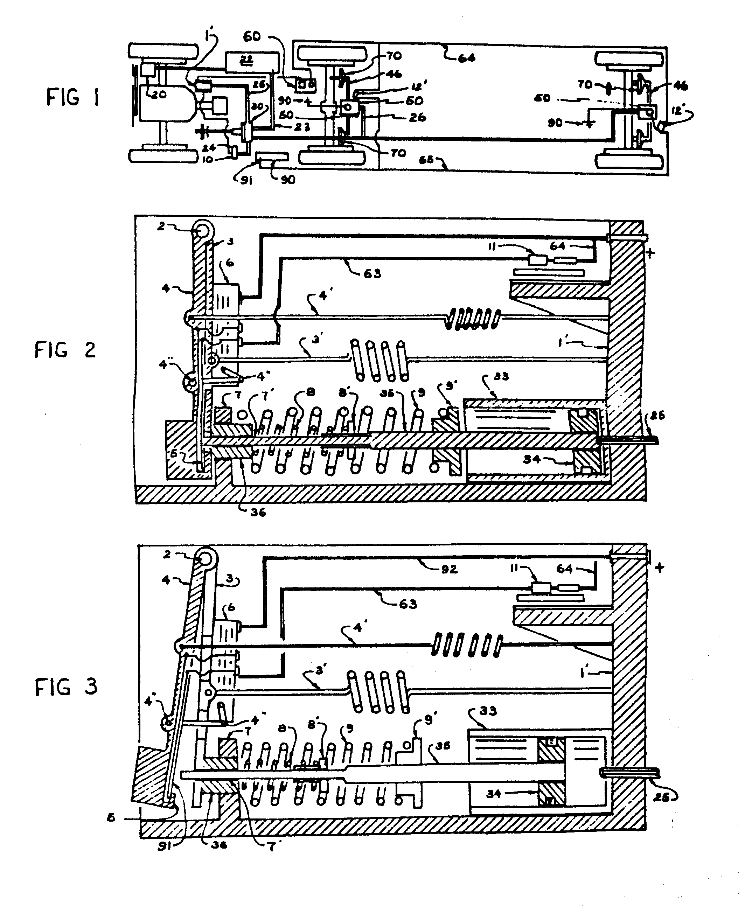

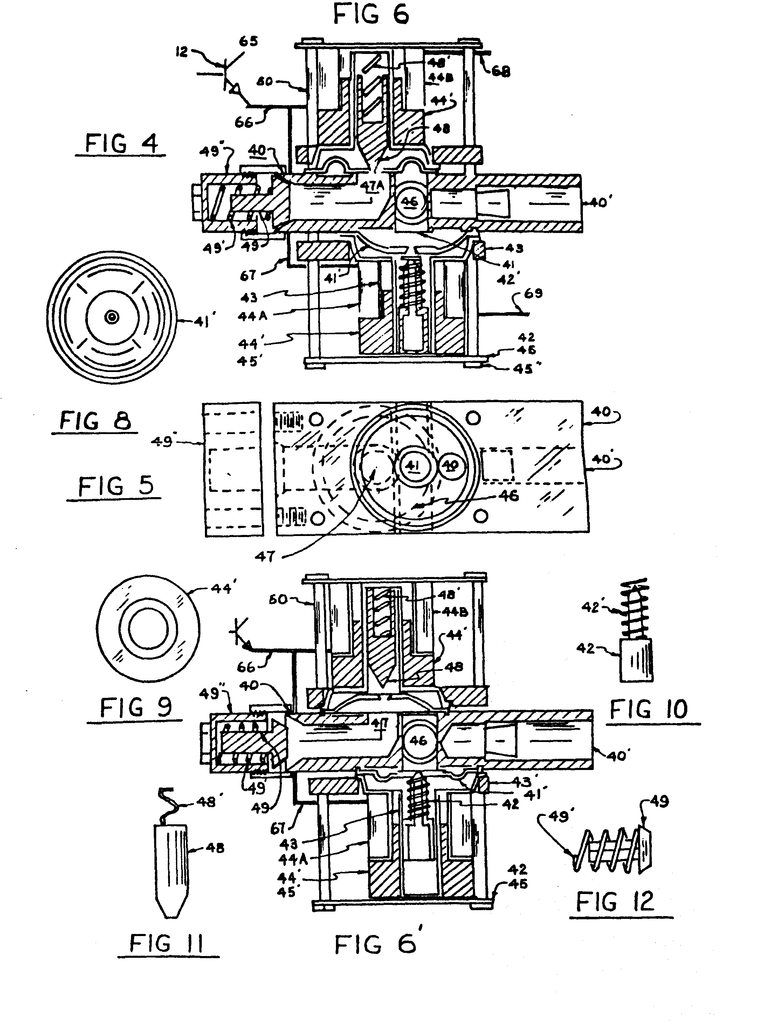

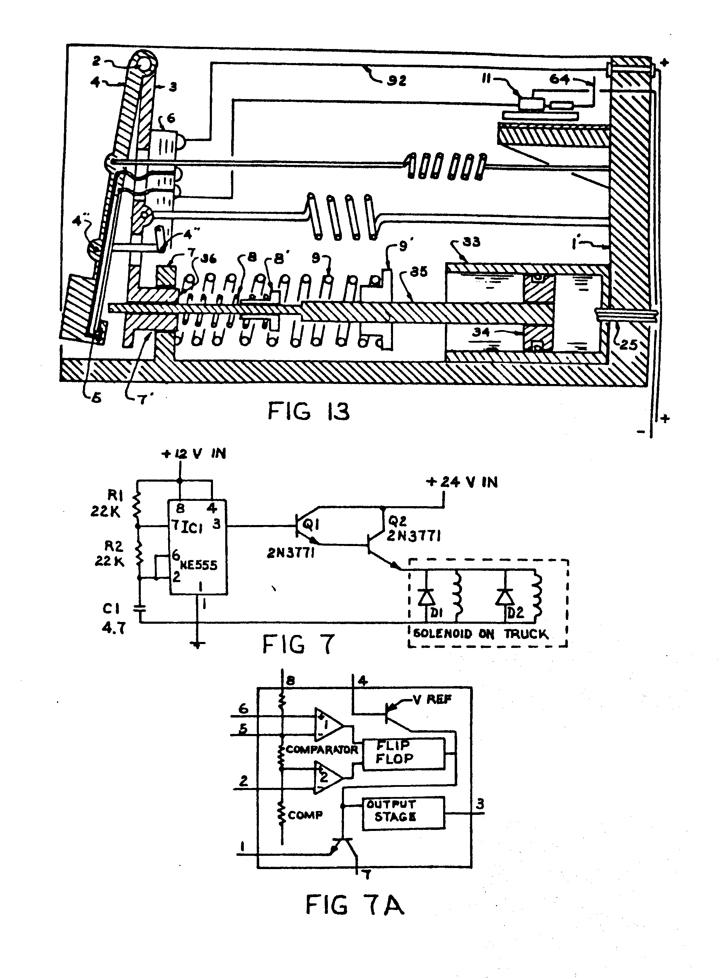

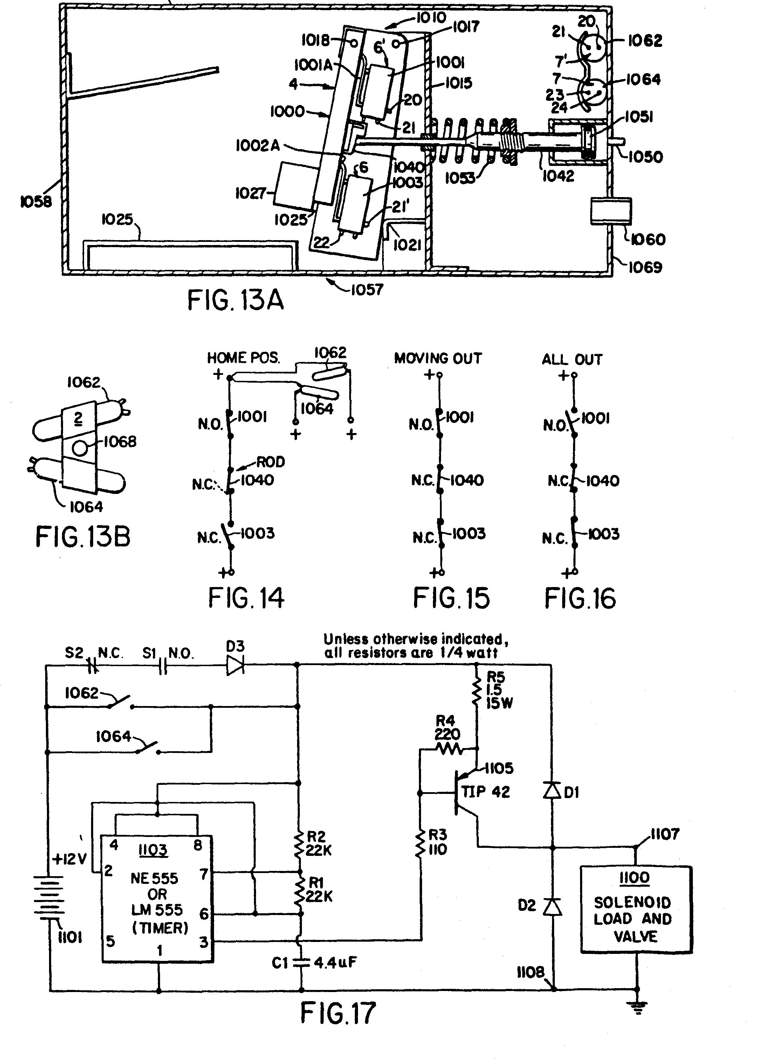

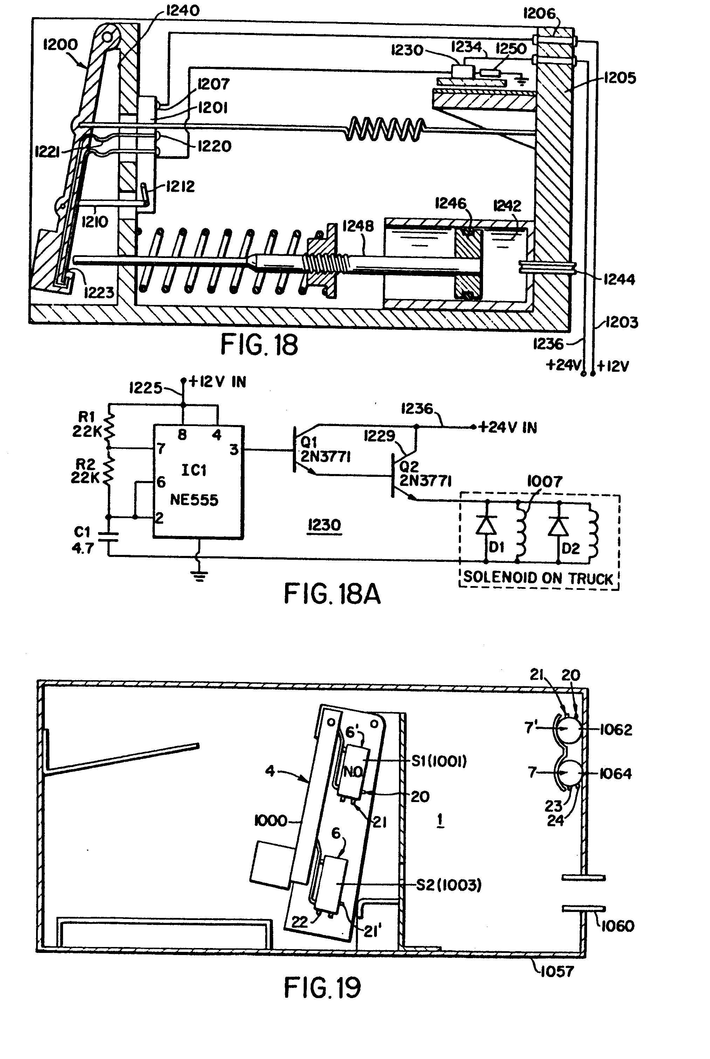

The pendulum carries a safety or override switch 1040 which can be opened by rod 1042 when the brakes are depressed hard due to air pressure at inlet 1050 driving piston 1051 forward. The vehicle is already equipped with the foot actuated metering valve 30 (FIG. 1) for this purpose.

Return spring 1053 (FIG. 13) normally maintains the piston 1051 in its inactive or right hand position.

Opening of switch 1040 interrupts power to the intermittent circuitry, thereby insuring total return to manual or normal braking action.

Housing 1057 is a heavy gauge steel box for attachment to the vehicle frame. End 1058 is the forward end and the top is designated at 1059. Electrical outlet 1060 provides a throughway for the electrical leads, best seen in FIGS. 14 - 17.

A feature of the invention resides in the provision of mercury switches 1062 and 1064 (FIGS. 13 and 13A).
These glass vials, with a small quantity of liquid
mercury in them, detect lateral or side whipping
movement of the trailer, and immediately energize
the intermittent braking action to stop the skidding.
They are 5 ampere mercury switches marketed by RADIO
SHACK.

A plastic bracket 1068 mounts switches 1062 and 1064
to the rear wall 1069 of housing 1057 with switch 1062
of the switches being angeled downwardly and to the
left, and the other switch 1062 being angled downwardly and to the right. The mercury is normally in the
lower end of each switch and is only thrown upwardly
and outwardly (to close the two contacts is the other
end of each switch) when the tail or trailer slips sideways. The angle to the horizontal of the switches is
usually between approximately one and seven degrees,
but the type of road conditions to be encountered,
size and weight of the truck, and possibly other factors will determine the optimal angle.

These angles may be determined by increasing them until
normal braking of the truck does not cause the mercury
to close the contacts in error. Of course, intermittent
braking is not untolerable depending on the type of load
being carried (i.e.) liquid or solid. Some trucks may
use the intermittent mode all of the time.

Referring now to FIG. 14, the condition of the three switches, just described, is shown for the pendulum 1000 in its home position (i. e.) stopped against plastic siges 1010, 1011, as shown in FIG. 13 in a 93 degree position relative to the horizontal.

Lower switch 1003 is shown open because it is a normally closed (N.C.) switch, and is held open by the pendulum in home position. This switch alone interrupts power to the intermittent circuitry. The pendulum has not moved forward (in FIG. 14) because momentum is not being reduced.

Safety switch 1040 is provided to interrupt power when the brakes are applied sufficiently hard to move piston 1051 forward to open it. This switch is provided for use in the event of a malfunction when the air pressure valve is inadvertently held open (if ever possible) to establish normal or regular braking. It is a N.C. switch.

The top switch 1001 is a N.O. switch and is shown closed because pendulum 1000 is holding it from opening.

In FIG. 15, the same circuit is shown when the pendulum is moving out. All switches are closed to power the intermittent braking to prevent locking of the wheels and jack knifing. The wheels are intermittently released and traction is not lost even on dry pavement. Stopping is improved for all road conditions--no tire skid marks are left on the pavement. This eliminates flat spots on tires, and permits longer wear.

In FIG. 16, the circuit is shown with switch 1001 open, thereby eliminating the intermittent braking action because pendulum 1000 has moved all the way out and conventional braking should hold because the traction must be good as the pendulum flew all the way forward. However, if momentum is not reduced sufficiently, the system will automatically return to the intermittent braking.

In FIG. 17, the control circuitry for all switches is shown. Integrated circuit 1103 is a conventional NE555 or LM555 TIMER available from National Semiconductor of Santa Clare, CA, 95051. This integrated circuit is coupled with resistors R2, R1 and C1 to operate as an astable multivibrator as described on page 9-36 of the "1982 Linear Data Book" by National Semiconductor. The restistance values shown for R3 and R1 along with the capactance value shown for C1 are configured to cause the output pin 3 to periodically assume a low state of a few tenths of a volt for approximately 1/9 th seconds followed by a high state of approximately 11.0 volts for approximately 2/9 th seconds when powered by a voltage source such as battery 1101 having a voltage of 12 Vdc applied to the integrated circuits power input terminals at pins 4 and 8 with respect to the reference potential or ground pin 1. Power is applied to integrated circuit 1103 pins 4 and 8 via a path through S2 N.C and S1 N.O or via N.O. switch 1062 or N.O. switch 1064 all sourcing current through forward biased diode D3 as described above.

A output pin 3 assumes a low state, it biases power transistor 1105 into conduction. The resistance of R3 is chosen to provide a base drive current of approximately 0.1Adc thus insuring that PNP transistor 1105 will operate in a saturated state with collector currents up to 0.8A. Resistor R4 couples the emitter to the base of transistor 1105 for the purpose of preventing Hfe multiplication of collector leakage current. Resistor R5 is installed to limit initial transient currents through transistor 1105 and to provide limited protection for the transistor in the event of momentary inadvertent grounding of output terminal 1107.

Diode D3 protects the circuit from damage in the event that in the course of installation, the installer inadvertently reverses to polarity of voltage source 1101. Diode D2 operates to provide a current path for current passing through solenoid 1100 to pass through as transistor 1105 is switched to a non-conductive state as pin 3 in TIMER 1103 goes to a high state. Diode D2 clamps terminal 1107 to a potenial of one diode drop (0.7 V) below ground 1108 each time transistor 1105 is switched off. Magnetizing energy stored in the solenoid is dissipated in the resistance of the solenoid and in diode D2. energy stored in solenoid load 1100 is dissipated.

Diode D1 prevents reverse voltage from being applied to transistor 1105 in the event of inadvertent installation.

The SOLENOID LOAD 1100 is a combination SOLENOID AND AIR CONTROL VALVE by Schrader Bellows of Akron, Ohio. The SOLENOID name plate identified it by the number K1254066. The AIR CONTROL VALVE was identified by the following information on its name plate: SCOBILL AIR CONTROL VALVE K1254066 6 83H.

In operation, pin 3 of TIMER 1103 assumes a low state causing trinsistor 1105 to switch on applying power for 1/9th seconds to SOLENOID 1100. The SOLENOID actuates the AIR CONTROL VALVE within 1100, and shown within block 30 in FIG. 1, dumping pressure releasing the brakes. The reverse of this sequence takes place for approximately 2/9 th seconds as pin 3 of integrated circuit 1103 assumes a high state.

In FIG. 18, the single pendulum 12200 is shown controlling micro-switch 1201 to determine when the intermittent braking takes over. The positive 12 volt lead 1203 passes through frame 1205 via insulator 1206 to extend to terminal 1207 of switch 1201.

The pendulum 1200 actuates switch 1201 over link 1210 pivotally connected to actuating arm 1212. with the pendulum forward, as shown, arm 1212 closes a path from terminal 1207 to terminal 1220 to extend +12 volts over lead 1221, through safety switch 1223, to lead 1224 which is connected over lead 1225 to the 12 volt input of chip 1230 container or circuit board (FIGS. 18 and 18A). The lead 1225 supplies +12 volts to pins 8, 4 and simply operates as a repetitive timed output high-or-low sequencer for driving transistor Q2 via transistor Q1 to energize solenoid 1007, intermittently. Q2 receives 24 volts on its collector 1229 from lead 1236 (FIGS. 18 and 18A) to power the SOLENOID-VALVE UNIT.

The reason the intermittent mode is accessed in FIG. 18 is because the brakes are just starting to hold and switching to the intermittent mode avoids any tendency toward skidding and jack-knifing.

When the pendulum 1200 is not forward, as pictured, switch arm 1212 is in its rearward position (OFF) and no connection is made from terminal 1207 to 1220. Thus, without B+ supply, no intermittent mode is available. But there is no braking of any kind when the pendulum is back against upright 1240 or nearly so.

When the over ride mode is desired, the truck driver simply presses hard on the brake pedal to cause high pressure air to enter chamber 1242, via conduit 1244, and force piston 1246 to the left, driving rod 1248 forward to open switch 1233 and insure no B+ supply to chip 1230. This insures the normal braking mode.

As an alternative to safety switch 1223, fuse box 1250 may contain an in-line which melts to open the B+ supply when the two-ninths of a second "on" period is exceeded. Other interrupters for the B+ supply may be employed.

In FIG. 19, the identical structure of FIG. 13 is shown, except that the safety rod 1042 and switch 1040 are omitted. Thus, the intermittent mode is employed mostly, even in hard over ride. However; other over ride mechanisms may be used if vecessary or desirable.

In summary, a slight reduction of momentum causes the intermittent braking mode to obtain. This is true on ice or dry pavement and takes place before traction is broken thereby preventing locking of wheels which radically changes vehicle contact to the surface resulting in skidding or jack-knifing or other problems.

Thus, even if the truck is speeding across ice or any surface, the intermittent braking will take over upon application of the brakes and prior to any skid.

When traction becomes so perfect that the pendulum swings far forward, the normal braking mode takes over from the intermittent mode. However, this seldom happens and the intermittent mode becomes the "normal" mode for all road conditions, thereby conserving tires, brakes and anxiety on the part of the driver.

Claims:

1. A method for selectively adding intermittent braking to a vehicular air braking system by only intermittently powering the brake actuator means in response to depression of the brake pedal while permitting conventional braking by greater braking pressure, comprising the steps of:

  - using a pendulum to energize an intermittent powering circuit for said actuator means when the vehicular momentum is reduced by braking;

  - using said pendulum to de-energize said circuit when braking traction is heavy; and

  - using a safety means to overcome effect of said pendulum to interrupt said energization.

2. The method of claim 1, comprising the further steps of:

  - detecting lateral movement of the vehicle; and,

  - energizing the intermittent ciruit in response to said detecting.

3. A method for substituting intermittent braking for non-intermittent braking in a vehicle by controlling the application and release of air pressure to brake actuator means through energization of an intermittent powering circuit for the actuator means, comprising the steps of:

- detecting lateral movement of the vehicle; and

- energizing the intermittent circuit in response to said detecting.

4. A method of claim 3, wherein:

- said detecting is accomplished by at least one generally laterally vehicle mounted switch actuible by lateral movement of the vehicle.

5. A method of claim 3, wherein:

- said detecting is achieved by a pair of mercury switches laterally oppositely mounted relative to the vehicle with the end of each switch carrying the mercury being declined slightly from the horizontal;

- whereby mercury is thrown from said end by vehicle lateral movement to close contacts in the opposite ends of the switches.

6. Apparatus for selectively substituting intermittent braking for non-intermittent braking in a vehicular air braking system by only intermittently powering brake actuator means in response to energization of an intermittent circuit; comprising, in combination:

- pendulum means for energizing said intermittent circuit when vehicle momentum is reduced by non-intermittent braking; and,

- liquid switch means for detecting lateral movement of the vehicle to energize said intermittent circuit

FIG 1

FIG 2

FIG 3

0214513

FIG 6

FIG 4

FIG 8

FIG 5

FIG 9

FIG 10

FIG 11

FIG 6'

FIG 12

0214513

FIG 13

FIG 7

FIG 7A

FIG.13A

FIG.13B

HOME POS.

FIG.14

MOVING OUT

FIG.15

ALL OUT

FIG.16

Unless otherwise indicated,
all resistors are 1/4 watt

S2 N.C.  S1 N.O.  D3

1062

1064

R5
1.5
15W

R4
220

1105
TIP 42

D1

+12V

1103

NE 555
OR
LM 555
(TIMER)

R2
22K

R1
22K

R3
110

1107

1100
SOLENOID
LOAD AND
VALVE

D2

1101

C1  4.4uF

1108

FIG.17

0214513

FIG.18

FIG.18A

FIG.19